# FASCICULE DE BREVET EUROPEEN

(11) **EP 4 235 012 B1**
(45) Date de publication et mention de la délivrance du brevet: **10.06.2026**
(21) Numéro de dépôt: 23156204.2
(22) Date de dépôt: 13.02.2023
(51) Int. Cl.: F17C 3/04

(54) **RÉSERVOIR COMPRENANT DES ENCEINTES INTERNE ET EXTERNE AINSI QU AU MOINS UN SYSTÈME DE LIAISON À LAMES RADIALES SOUPLES RELIANT LESDITES ENCEINTES**
TANK MIT INNEN- UND AUSSENRÄUMEN SOWIE MINDESTENS EINEM VERBINDUNGSSYSTEM MIT FLEXIBLEN RADIALEN LAMELLEN ZUR VERBINDUNG DIESER BEHÄLTER
TANK COMPRISING INNER AND OUTER ENCLOSURES AND AT LEAST ONE SYSTEM FOR CONNECTING FLEXIBLE RADIAL STRIPS CONNECTING SAID ENCLOSURES

(30) Priorité: 25.02.2022 FR 2201665
(43) Date de publication de la demande: 30.08.2023
(73) Titulaire: Airbus Operations (S.A.S.), 31060 Toulouse Cedex 9 (FR)
(72) Inventeur: GALLARDO, Julien, 31060 TOULOUSE (FR)
(74) Mandataire: Airbus-OPS SAS

(56) Documents cités:
- WO-A1-2014/015969
- WO-A1-2014/161899
- WO-A1-2017/190846
- CA-A1- 2 441 775
- US-A- 3 241 705
- US-A- 3 446 388

## Description

La présente demande se rapporte à un réservoir comprenant des enceintes interne et externe ainsi qu'au moins un système de liaison à lames radiales souples reliant lesdites enceintes.

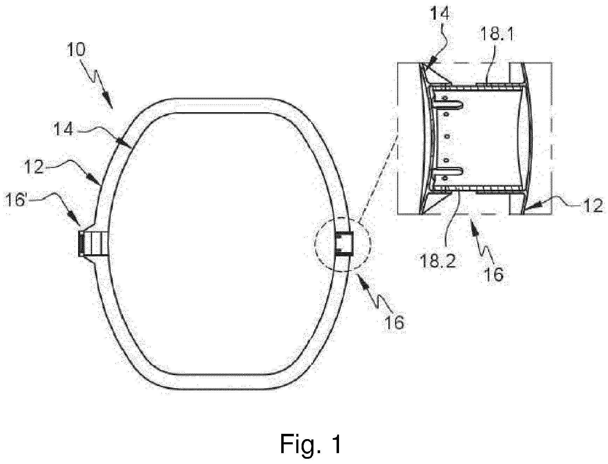

Selon un mode de réalisation selon l'art antérieur visible sur la figure 1, un réservoir à hydrogène 10 comprend une enceinte externe 12, une enceinte interne 14 positionnée dans l'enceinte externe 12, une isolation thermique entre les enceintes externe et interne 12, 14 ainsi que deux systèmes de liaison 16, 16' diamétralement opposés, reliant les enceintes externe et interne 12, 14. En fonctionnement, en raison de la température de stockage de l'hydrogène à l'état cryogénique, l'enceinte interne 14 se contracte beaucoup plus que l'enceinte externe 12. Par conséquent, au moins un des deux systèmes de liaison 16 est configuré pour autoriser un déplacement de l'enceinte interne 14 par rapport à l'enceinte externe 12 selon une direction de déplacement. Généralement, un premier système de liaison 16' (celui de gauche sur la figure 1) est rigide et ne permet aucun mouvement relatif entre les enceintes externe et interne 12, 14 alors qu'un deuxième système de liaison 16 (celui de droite sur la figure 1) autorise un mouvement relatif entre les enceintes externe et interne 12, 14.

Ce deuxième système de liaison 16 comprend un manchon femelle 18.1 solidaire de l'enceinte externe 12 ainsi qu'un manchon mâle 18.2 solidaire de l'enceinte interne 14 et configuré pour coulisser dans le manchon femelle 18.1. Ces deux manchons femelle et mâle 18.1, 18.2 sont coaxiaux et présentent des axes confondus avec la direction de déplacement.

Ce mode de réalisation n'est pas pleinement satisfaisant en raison des risques de coincement causés par les frottements entre les manchons femelle et mâle 18.1, 18.2 ainsi que du caractère aléatoire des contacts entre les manchons femelle et mâle 18.1, 18.2.

Le document CA 2 441 775 A1 décrit un réservoir selon l'art antérieur.

La présente invention vise à remédier à tout ou partie des inconvénients de l'art antérieur.

A cet effet, l'invention a pour objet un réservoir comprenant une enceinte externe, une enceinte interne positionnée dans l'enceinte externe ainsi que des premier et deuxième systèmes de liaison, diamétralement opposés, reliant les enceintes externe et interne, les enceintes externe et interne se déplaçant l'une par rapport à l'autre selon une direction de déplacement en fonctionnement.

Au moins un des premier et deuxième systèmes de liaison comprend une partie centrale reliée à un premier élément parmi l'enceinte externe et l'enceinte interne ainsi qu'au moins trois lames réparties autour de la partie centrale, chaque lame s'étendant entre une première extrémité reliée à la partie centrale et une deuxième extrémité qui présente une tête reliée à un deuxième élément, différent du premier élément, parmi l'enceinte externe et l'enceinte interne, chaque lame étant suffisamment souple pour se déformer de manière élastique entre ses première et deuxième extrémités selon la direction de déplacement.

Selon l'invention, les lames sont courbes et ont un profil tel que les têtes sont :
- décalées vers l'enceinte interne par rapport à la partie centrale en l'absence de contraintes, l'absence de contraintes correspondant à l'absence d'hydrogène dans l'enceinte interne, et
- disposées sensiblement dans un même plan transversal que la partie centrale en présence de contraintes, en fonctionnement, la présence de contraintes correspondant à la présence d'hydrogène à l'état cryogénique dans l'enceinte interne.

Les lames du système de liaison, grâce à leur capacité à se déformer de manière élastique, permettent aux enceintes externe et interne de se déplacer l'une par rapport à l'autre selon la direction de déplacement (notamment en raison des phénomènes de dilatation) tout en assurant la reprise des efforts radiaux entre les enceintes externe et interne. De plus, en présence d'hydrogène à l'état cryogénique dans l'enceinte interne, cette dernière s'écarte de l'enceinte externe au droit du système de liaison du fait de la rétractation de l'enceinte interne liée à la diminution de sa température. Le fait que le profil des lames soit courbe et tel que les lames sont positionnées sensiblement dans un plan transversal lorsque l'enceinte interne s'est contractée en raison de la présence d'hydrogène à l'état cryogénique dans ladite enceinte interne, permet de limiter les contraintes dans les lames, en présence d'hydrogène à l'état cryogénique dans l'enceinte interne, à un niveau beaucoup plus faible que si les lames n'avaient pas un tel profil courbe. En effet, ce profil courbe permet ainsi au lames de se déformer sans contraintes élevées lors de la rétractation de l'enceinte interne. Il permet également aux lames de se déformer sans contraintes élevées lorsque la température des lames diminue sous l'effet d'une conduction thermique depuis l'enceinte interne contenant de l'hydrogène à l'état cryogénique.

Selon une autre caractéristique, la partie centrale est reliée à l'enceinte interne, chaque tête étant reliée à l'enceinte externe.

Selon une autre caractéristique, la partie centrale comporte un support solidaire de l'enceinte interne, un anneau relié à l'enceinte externe par l'intermédiaire des lames et configuré pour être positionné autour du support ainsi qu'un système de fixation configuré pour immobiliser l'anneau par rapport au support au moins selon la direction de déplacement, le système de liaison comportant des première et deuxième parties dissociables, la première partie comportant l'anneau, les lames ainsi que les têtes, la deuxième partie comportant le support. Selon une autre caractéristique, le support comprend une embase fixée sur l'enceinte interne par des éléments de fixation ainsi qu'une portion tubulaire solidaire de l'embase, présentant un axe sensiblement confondu avec la direction de déplacement et sur laquelle est emmanché l'anneau.

Selon une autre caractéristique, le système de fixation comprend un tronçon fileté prévu au niveau de la portion tubulaire ainsi qu'un écrou configuré pour se visser sur le tronçon fileté. Selon une autre caractéristique, le système de fixation comprend un système de blocage en rotation de l'écrou et/ou une bague de compression intercalée entre l'écrou et l'anneau et/ou deux bagues de cisaillement positionnées de part et d'autre de l'anneau.

Selon une autre caractéristique, l'enceinte externe comprend une ouverture au droit du support ainsi qu'un couvercle pour obturer l'ouverture.

Selon une autre caractéristique, l'enceinte externe comprend, pour chaque tête, une attache avec une section en U, comportant une base contre laquelle est fixée la tête, positionnée dans un plan sensiblement transversal ainsi que des jambes reliant la base à l'enceinte externe.

Selon une autre caractéristique, le système de liaison comprend un système de sécurité comportant un manchon femelle solidaire de l'enceinte externe qui présente un axe confondu avec la direction de déplacement ainsi qu'une extension mâle solidaire de l'enceinte interne, positionnée dans le manchon femelle, l'extension mâle et le manchon femelle étant dimensionnés de manière à ce qu'il subsiste un jeu tout autour de l'extension mâle entre le manchon femelle et l'extension mâle lorsque les lames ne sont pas endommagées.

D'autres caractéristiques et avantages ressortiront de la description de l'invention qui va suivre, description donnée à titre d'exemple uniquement, en regard des dessins annexés parmi lesquels :
- La figure 1 est une représentation schématique d'un réservoir et d'un système de liaison illustrant un mode de réalisation de l'art antérieur,
- La figure 2 est une représentation schématique d'un réservoir et d'un système de liaison illustrant un mode de réalisation de l'invention,
- La figure 3 est une vue en perspective d'une partie d'une enceinte externe et d'une première partie d'un système de liaison à différentes étapes de montage illustrant un mode de réalisation de l'invention,
- La figure 4 est une vue en perspective d'une partie d'une enceinte interne et d'une deuxième partie d'un système de liaison illustrant un mode de réalisation de l'invention,
- La figure 5 est une vue en perspective des enceintes interne et externe visibles sur les figures 3 et 4 préalablement à leur assemblage illustrant un mode de réalisation de l'invention,
- La figure 6 est une vue en perspective d'une partie d'un réservoir après l'insertion de l'enceinte interne dans l'enceinte externe illustrant un mode de réalisation de l'invention,
- La figure 7 est une coupe longitudinale des première et deuxième parties du système de liaison, visibles sur les figures 3 et 4, assemblées illustrant un mode de réalisation de l'invention,
- La figure 8 est une coupe longitudinale d'une partie d'un réservoir illustrant un mode de réalisation de l'invention,
- La figure 9 est une représentation schématique de deux systèmes de liaison ayant des profils différents illustrant deux modes de réalisation de l'invention,
- La figure 10 est une représentation schématique de plusieurs systèmes de liaison illustrant plusieurs modes de réalisation de l'invention, et
- La figure 11 est une coupe longitudinale d'une partie d'un système de liaison illustrant un autre mode de réalisation de l'invention.

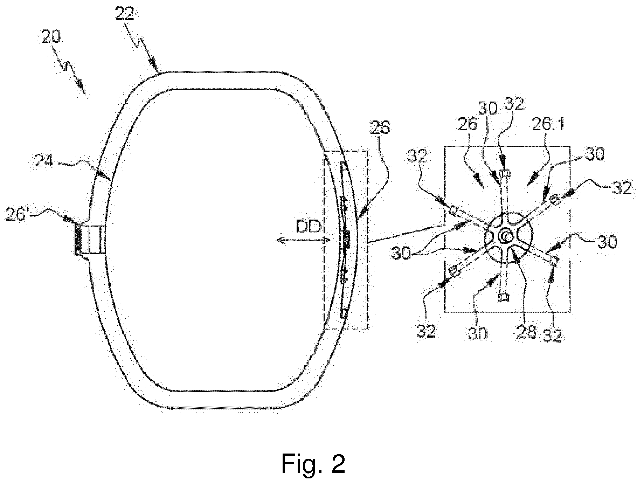

Selon un mode de réalisation visible sur la figure 2, un réservoir 20 comprend une enceinte externe 22, une enceinte interne 24 positionnée dans l'enceinte externe 22 ainsi que des premier et deuxième systèmes de liaison 26, 26', diamétralement opposés, reliant les enceintes externe et interne 22, 24.

Selon une application, le réservoir 20 est adapté pour stocker de l'hydrogène à l'état cryogénique dans l'enceinte interne 24. Selon cette application, le réservoir 20 comprend une isolation thermique entre les enceintes externe et interne 22, 24.

Les enceintes externe et interne ainsi que l'isolation thermique ne sont pas plus décrites car elles peuvent être identiques à celles de l'art antérieur.

Selon une première configuration, le deuxième système de liaison 26' est rigide et identique au système de liaison rigide de l'art antérieur. Selon une deuxième configuration, les premier et deuxième systèmes de liaison 26, 26' sont identiques.

En fonctionnement, au droit du premier système de liaison 26, les enceintes externe et interne 22, 24 peuvent se déplacer l'une par rapport à l'autre selon une direction de déplacement DD en raison des phénomènes de dilatation différents des enceintes externe et interne 22, 24.

Pour la suite de la description, une direction longitudinale est parallèle à la direction de déplacement DD. Une direction radiale est perpendiculaire à la direction de déplacement DD. Un plan transversal est un plan perpendiculaire à la direction de déplacement DD. Un plan longitudinal contient la direction de déplacement DD.

Le système de liaison 26 comprend une partie centrale 28 reliée à un premier élément parmi l'enceinte externe 22 et l'enceinte interne 24, plusieurs lames 30 qui s'étendent chacune entre des première et deuxième extrémités, pour chaque lame 30 la première extrémité étant reliée à la partie centrale 28, la deuxième extrémité présentant une tête 32 reliée à un deuxième élément, différent du premier élément, parmi l'enceinte externe 22 et l'enceinte interne 24.

Chaque lame 30 est radiale. Par lame radiale, on entend que la lame 30 est orientée selon une direction approximativement radiale, ses première et deuxième extrémités étant positionnées dans un plan longitudinal. Selon cet agencement, la tête 32 est décalée par rapport à la partie centrale 28 selon une direction comportant une composante perpendiculaire à la direction de déplacement DD.

Chaque lame 30 se présente sous la forme d'une bande de matière. Elle est suffisamment souple pour se déformer de manière élastique entre ses première et deuxième extrémités selon la direction de déplacement DD.

Selon un agencement, la partie centrale 28 est reliée à l'enceinte interne 24 et chaque tête 32 est reliée à l'enceinte externe 22.

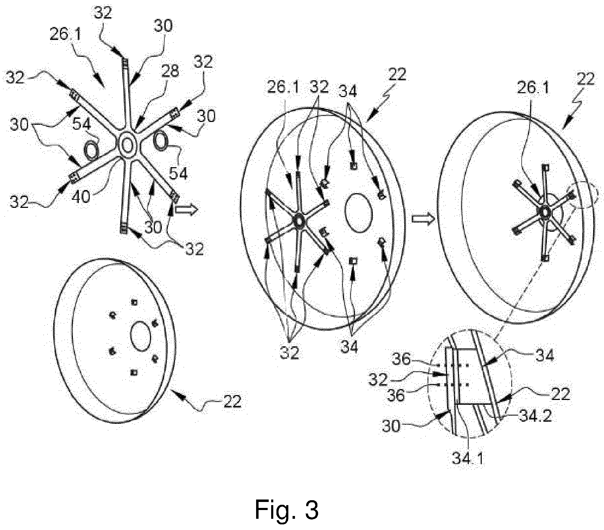

Comme illustré sur la figure 3, pour chaque tête 32, l'enceinte externe 22 comprend une attache 34 avec une section en U, comportant une base 34.1 contre laquelle est fixée une tête 32, positionnée dans un plan sensiblement transversal ainsi que des jambes 34.2 reliant la base 34.1 à l'enceinte externe 22.

Selon une configuration, chaque tête 32 est reliée à une attache 34 par au moins un élément de fixation 36 comme une vis, un boulon, un rivet ou autres.

Selon un mode de réalisation, la partie centrale 28 comporte un support 38 solidaire de l'enceinte interne 24, un anneau 40 relié à l'enceinte externe 22 par l'intermédiaire des lames 30 et configuré pour être positionné autour du support 38 ainsi qu'un système de fixation 42 configuré pour immobiliser l'anneau 40 par rapport au support 38 au moins selon la direction de déplacement DD. Ainsi, le système de liaison 26 comprend des première et deuxième parties 26.1, 26.2 dissociables.

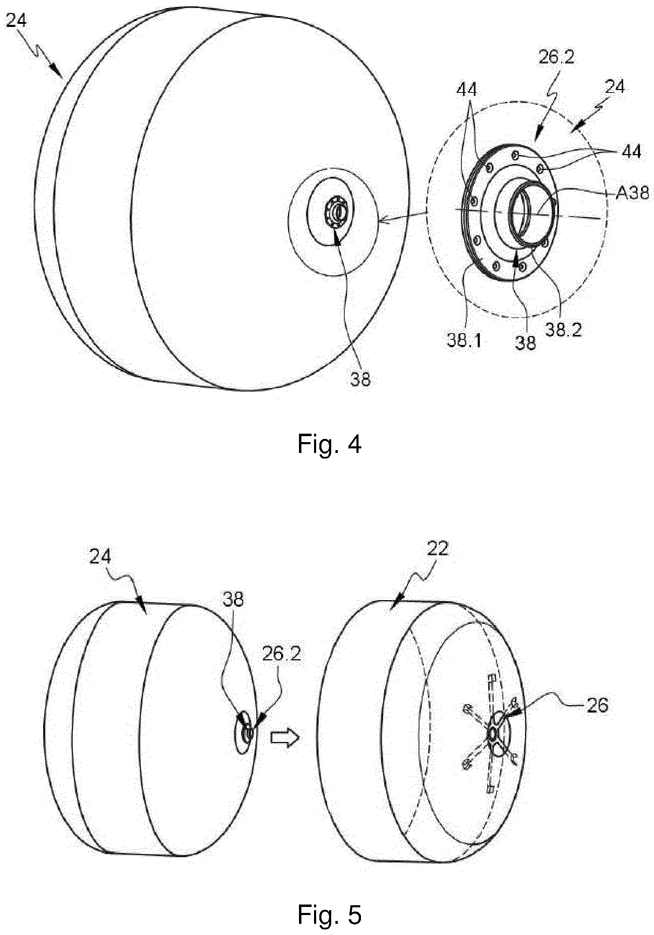

Selon ce mode de réalisation, la première partie 26.1, visible sur la figure 3, comprend l'anneau 40, les lames 30 ainsi que les têtes 32 qui ne forment qu'une seule et même pièce. La deuxième partie 26.2, visible sur la figure 4, comprend le support 38.

Selon une configuration, le support 38 comprend une embase 38.1 fixée sur l'enceinte interne 24 par des éléments de fixation 44, comme des boulons ou des rivets par exemple, ainsi qu'une portion tubulaire 38.2 solidaire de l'embase 38.1, présentant un axe A38 sensiblement confondu avec la direction de déplacement DD et sur laquelle est emmanché l'anneau 40. L'embase 38.1 et la portion tubulaire 38.2 ne forment qu'une seule et même pièce.

Le support 38 peut comprendre une contre-plaque positionnée dans l'enceinte interne 24 et reliée à l'embase 38.1 par les éléments de fixation 44.

Le support 38 peut être métallique ou réalisé en matériau composite.

L'anneau 40 est sensiblement plat et positionné en fonctionnement dans un plan transversal. Il présente un diamètre intérieur sensiblement égal ou très légèrement supérieur au diamètre extérieur de la portion tubulaire 38.2.

La première partie 26.1, comprenant l'anneau 40, les lames 30 ainsi que les têtes 32, peut être métallique ou réalisée en matériau composite.

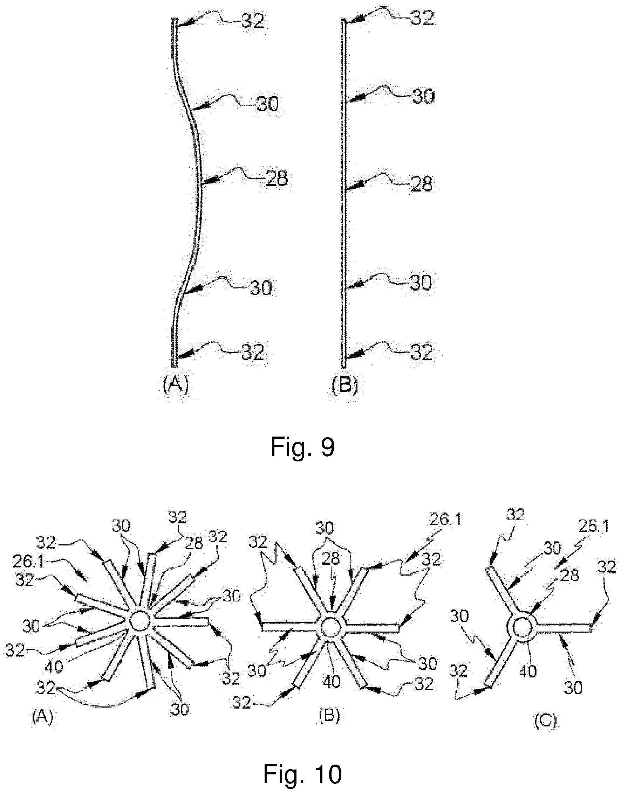

Comme illustré sur la partie (A) de la figure 9, la première partie 26.1 et plus particulièrement les lames 30 sont courbes, les têtes 32 étant décalées vers l'enceinte interne 24 par rapport à la partie centrale 28 en l'absence de contraintes et étant disposées sensiblement dans un même plan transversal que la partie centrale 28 en présence de contraintes en fonctionnement. Ainsi, lorsque les deux enceintes externe et interne 22, 24 sont à la même température, par exemple en l'absence d'hydrogène dans l'enceinte interne 24, les lames 30 ont un profil courbe. En présence d'hydrogène dans l'enceinte interne 24, cette dernière s'écarte de l'enceinte externe 22 au droit du système de liaison 26. Le profil courbe des lames 30 est déterminé de manière à ce que les lames 30 soient positionnées dans un plan transversal, comme illustré sur la partie (B) de la figure 9, lorsque l'enceinte interne 24 s'est contractée en raison de la présence d'hydrogène à l'état cryogénique dans ladite enceinte interne 24.

Comme illustré sur les figures 2, 3 et la partie (B) de la figure 10, le système de liaison 26 comprend six lames 30 régulièrement réparties sur la périphérie de la partie centrale 28. Bien entendu, l'invention n'est pas limitée à ce nombre de lames 30. Ainsi, le système de liaison 26 peut comprendre neuf lames 30, comme illustré sur la partie (A) de la figure 10, ou trois lames 30, comme illustré sur la partie (C) de la figure 10. Quel que soit le mode de réalisation, le système de liaison 26 comprend au moins trois lames 30 régulièrement réparties autour de la partie centrale 28.

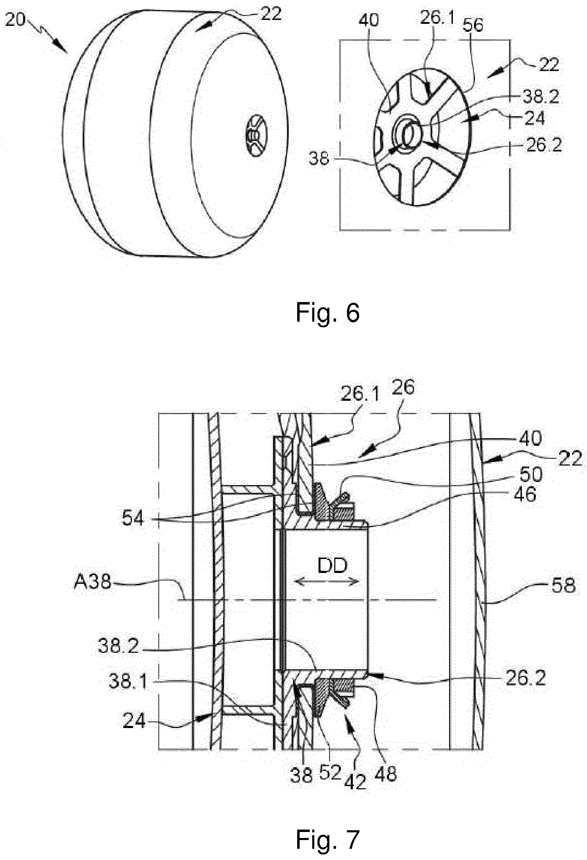

Selon un mode de réalisation visible sur la figure 7, le système de fixation 42 comprend un tronçon fileté 46 prévu sur la surface cylindrique extérieure de la portion tubulaire 38.2 ainsi qu'un écrou 48 configuré pour se visser sur le tronçon fileté 46. En complément, le système de fixation 42 comprend un système de blocage en rotation 50 de l'écrou 48 coopérant avec ce dernier pour l'immobiliser en rotation et/ou une bague de compression 52 intercalée entre l'écrou 48 et l'anneau 40.

Selon un mode de réalisation visible sur les figures 3 et 7, le système de fixation 42 comprend deux bagues de cisaillement 54 positionnées de part et d'autre de l'anneau 40, l'une d'elles étant intercalée entre l'embase 38.1 du support 38 et l'anneau 40, l'autre étant intercalée entre la bague de compression 52 et l'anneau 40.

Pour permettre la mise en place du système de fixation 42, l'enceinte externe 22 comprend une ouverture 56 au droit du support 38 ainsi qu'un couvercle 58 pour obturer l'ouverture 56. L'ouverture 56 est dimensionnée pour permettre la mise en place du système de fixation 42 depuis l'extérieur de l'enceinte externe 22.

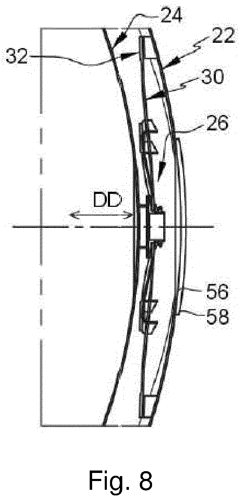

Un procédé de montage du réservoir 20 est illustré sur les figures 3 à 8.

Après avoir réalisé les enceintes externe et interne 22, 24, la première partie 26.1 est mise en place en reliant chacune des têtes 32 à l'attache 34 correspondante grâce aux éléments de fixation 36, comme illustré sur la figure 3. En parallèle, l'embase 38.1 du support 38 est fixée sur l'enceinte interne 24 grâce aux éléments de fixation 44, comme illustré sur la figure 4.

En suivant, l'enceinte interne 24 est positionnée dans l'enceinte externe 22 en positionnant l'anneau 40 de la première partie 26.1 autour de la portion tubulaire 38.2 du support 38, comme illustré sur les figures 5 et 6. Pour pouvoir mettre en place l'enceinte interne 24 dans l'enceinte externe 22, cette dernière est réalisée en deux parties qui sont assemblées après la mise en place de l'enceinte interne 24.

Les composants du système de fixation 42 sont introduits via l'ouverture 56 et mis en place pour immobiliser l'anneau 40 par rapport au support 38 selon la direction de déplacement DD.

Enfin, l'ouverture 56 est fermée en fixant le couvercle 58 sur l'enceinte externe 22 tout autour de l'ouverture 56 par tout moyen approprié, comme par soudage par exemple.

Les lames 30 du système de liaison 26 permettent aux enceintes externe et interne 22, 24 de se déplacer l'une par rapport à l'autre selon la direction de déplacement DD en raison des phénomènes de dilatation. En complément, les lames 30 assurent la reprise des efforts radiaux (orientés perpendiculairement à la direction de déplacement DD) entre les enceintes externe et interne 22, 24.

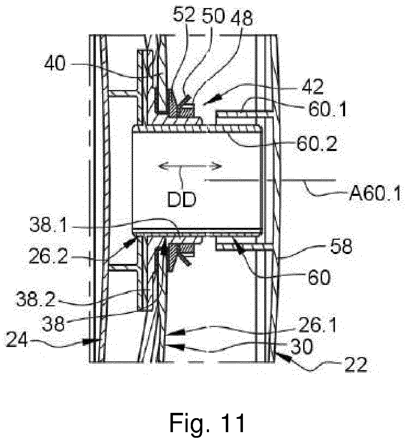

Selon un mode de réalisation visible sur la figure 11, le système de liaison 26 comprend un système de sécurité 60 permettant à l'enceinte externe 22 de soutenir l'enceinte interne 24 en cas de rupture des lames 30. Ce système de liaison 26 comprend un manchon femelle 60.1 solidaire de l'enceinte externe 22, plus particulièrement de son couvercle 58, présentant un axe A60.1 confondu avec la direction de déplacement DD ainsi qu'une extension mâle 60.2, solidaire de l'enceinte interne 24, configurée pour être positionnée dans le manchon femelle 60.1. Le manchon femelle 60.1 et l'extension mâle 60.2 sont dimensionnés de manière à ce qu'en l'absence de contraction de l'enceinte interne 24, l'extension mâle 60.2 n'interfère pas avec le couvercle 58 et à ce qu'en présence d'une contraction de l'enceinte interne 24, une partie de l'extension mâle 60.2 soit toujours positionnée dans le manchon femelle 60.1. Le manchon femelle 60.1 et l'extension mâle 60.2 sont également dimensionnés de manière à ce qu'il subsiste un jeu tout autour de l'extension mâle 60.2 entre cette dernière et le manchon femelle 60.1, lorsque les lames 30 ne sont pas endommagées, pour que le système de sécurité 60 n'induise aucun frottement entre le manchon femelle 60.1 et l'extension mâle 60.2.

Selon une configuration, l'extension mâle 60.2 peut être une extension du support 38, plus particulièrement de sa portion tubulaire 38.2. Selon une autre configuration, l'extension mâle 60.2 est un tube distinct du support 38 emmanché dans la portion tubulaire 38.2 du support 38.

## Revendications

1. Réservoir comprenant une enceinte externe (22), une enceinte interne (24) positionnée dans l'enceinte externe (22) ainsi que des premier et deuxième systèmes de liaison (26, 26'), diamétralement opposés, reliant les enceintes externe et interne (22, 24), les enceintes externe et interne (22, 24) se déplaçant l'une par rapport à l'autre selon une direction de déplacement (DD) en fonctionnement, le réservoir étant tel qu'au moins un des premier et deuxième systèmes de liaison (26, 26') comprend une partie centrale (28) reliée à un premier élément parmi l'enceinte externe (22) et l'enceinte interne (24) ainsi qu'au moins trois lames (30) réparties autour de la partie centrale (28), chaque lame (30) s'étendant entre une première extrémité reliée à la partie centrale (28) et une deuxième extrémité qui présente une tête (32) reliée à un deuxième élément, différent du premier élément, parmi l'enceinte externe (22) et l'enceinte interne (24), chaque lame (30) étant suffisamment souple pour se déformer de manière élastique entre ses première et deuxième extrémités selon la direction de déplacement (DD),
**caractérisé en ce que** les lames (30) sont courbes et ont un profil tel que les têtes (32) sont :
- décalées vers l'enceinte interne (24) par rapport à la partie centrale (28) en l'absence de contraintes, l'absence de contraintes correspondant à l'absence d'hydrogène dans l'enceinte interne (24), et
- disposées sensiblement dans un même plan transversal que la partie centrale (28) en présence de contraintes, en fonctionnement, la présence de contraintes correspondant à la présence d'hydrogène à l'état cryogénique dans l'enceinte interne (24).

2. Réservoir selon la revendication 1, **caractérisé en ce que** la partie centrale (28) est reliée à l'enceinte interne (24) et **en ce que** chaque tête (32) est reliée à l'enceinte externe (22).

3. Réservoir selon la revendication précédente, **caractérisé en ce que** la partie centrale (28) comporte un support (38) solidaire de l'enceinte interne (24), un anneau (40) relié à l'enceinte externe (22) par l'intermédiaire des lames (30) et configuré pour être positionné autour du support (38) ainsi qu'un système de fixation (42) configuré pour immobiliser l'anneau (40) par rapport au support (38) au moins selon la direction de déplacement (DD), le système de liaison (26) comportant des première et deuxième parties (26.1, 26.2) dissociables, la première partie (26.1) comportant l'anneau (40), les lames (30) ainsi que les têtes (32), la deuxième partie (26.2) comportant le support (38).

4. Réservoir selon la revendication précédente, **caractérisé en ce que** le support (38) comprend une embase (38.1) fixée sur l'enceinte interne (24) par des éléments de fixation (44) ainsi qu'une portion tubulaire (38.2) solidaire de l'embase (38.1), présentant un axe (A38) sensiblement confondu avec la direction de déplacement (DD) et sur laquelle est emmanché l'anneau (40).

5. Réservoir selon l'une des revendications 3 à 4, **caractérisé en ce que** le système de fixation (42) comprend un tronçon fileté (46) prévu au niveau de la portion tubulaire (38.2) ainsi qu'un écrou (48) configuré pour se visser sur le tronçon fileté (46).

6. Réservoir selon la revendication précédente, **caractérisé en ce que** le système de fixation (42) comprend un système de blocage en rotation (50) de l'écrou (48) et/ou une bague de compression (52) intercalée entre l'écrou (48) et l'anneau (40) et/ou deux bagues de cisaillement (54) positionnées de part et d'autre de l'anneau (40).

7. Réservoir selon l'une des revendications 3 à 6, **caractérisé en ce que** l'enceinte externe (22) comprend une ouverture (56) au droit du support (38) ainsi qu'un couvercle (58) pour obturer l'ouverture (56).

8. Réservoir selon l'une des revendication 2 à 7, **caractérisé en ce que** l'enceinte externe (22) comprend, pour chaque tête (32), une attache (34) avec une section en U, comportant une base (34.1) contre laquelle est fixée la tête (32), positionnée dans un plan sensiblement transversal ainsi que des jambes (34.2) reliant la base (34.1) à l'enceinte externe (22).

9. Réservoir selon l'une des revendications précédentes, **caractérisé en ce que** le système de liaison (26) comprend un système de sécurité (60) comportant un manchon femelle (60.1) solidaire de l'enceinte externe (22), qui présente un axe (A60.1) confondu avec la direction de déplacement (DD) ainsi qu'une extension mâle (60.2), solidaire de l'enceinte interne (24), positionnée dans le manchon femelle (60.1), l'extension mâle (60.2) et le manchon femelle (60.1) étant dimensionnés de manière à ce qu'il subsiste un jeu tout autour de l'extension mâle (60.2) entre le manchon femelle (60.1) et l'extension mâle (60.2) lorsque les lames (30) ne sont pas endommagées.

## Patentansprüche

1. Tank, umfassend einen Außenbehälter (22), einen Innenbehälter (24), der in dem Außenbehälter (22) angeordnet ist, sowie diametral entgegengesetzte erste und zweite Verbindungssysteme (26, 26'), die den Außen- und Innenbehälter (22, 24) verbinden, wobei sich die Außen- und Innenbehälter (22, 24) im Betrieb relativ zueinander entlang einer Bewegungsrichtung (DD) bewegen, wobei der Tank dergestalt ist, dass mindestens eines der ersten und zweiten Verbindungssysteme (26, 26') einen zentralen Teil (28), der mit einem ersten Element unter dem Außenbehälter (22) und dem Innenbehälter (24) verbunden ist, sowie mindestens drei Zungen (30), die um den zentralen Teil (28) verteilt sind, umfasst, wobei sich jede Zunge (30) zwischen einem mit dem zentralen Teil (28) verbundenen ersten Ende und einem zweiten Ende, das einen Kopf (32) aufweist, der mit einem von dem ersten Element verschiedenen zweiten Element unter dem Außenbehälter (22) und dem Innenbehälter (24) verbunden ist, erstreckt, wobei jede Zunge (30) ausreichend flexibel ist, um sich zwischen ihren ersten und zweiten Enden entlang der Bewegungsrichtung (DD) elastisch zu verformen,
**dadurch gekennzeichnet, dass** die Zungen (30) gekrümmt sind und ein derartiges Profil aufweisen, dass die Köpfe (32):
- bei Nichtvorliegen von Beanspruchungen zu dem Innenbehälter (24) hin in Bezug auf den zentralen Teil (28) versetzt sind, wobei das Nichtvorliegen von Beanspruchungen dem Nichtvorliegen von Wasserstoff in dem Innenbehälter (24) entspricht, und
- im Betrieb, bei Vorliegen von Beanspruchungen, im Wesentlichen in einer selben Querebene wie der zentrale Teil (28) angeordnet sind, wobei das Vorliegen von Beanspruchungen dem Vorliegen von Wasserstoff im kryogenen Zustand in dem Innenbehälter (24) entspricht.

2. Tank nach Anspruch 1, **dadurch gekennzeichnet, dass** der zentrale Teil (28) mit dem Innenbehälter (24) verbunden ist und dass jeder Kopf (32) mit dem Außenbehälter (22) verbunden ist.

3. Tank nach dem vorhergehenden Anspruch, **dadurch gekennzeichnet, dass** der zentrale Teil (28) einen Träger (38), der mit dem Innenbehälter (24) fest verbunden ist, einen Ring (40), der mit dem Außenbehälter (22) über die Zungen (30) verbunden ist und dazu ausgebildet ist, um den Träger (38) herum angeordnet zu werden, sowie ein Befestigungssystem (42), das dazu ausgebildet ist, den Ring (40) relativ zu dem Träger (38) mindestens entlang der Bewegungsrichtung (DD) zu immobilisieren, umfasst, wobei das Verbindungssystem (26) erste und zweite trennbare Teile (26.1, 26.2) umfasst, wobei der erste Teil (26.1) den Ring (40), die Zungen (30) sowie die Köpfe (32) umfasst, wobei der zweite Teil (26.2) den Träger (38) umfasst.

4. Tank nach dem vorhergehenden Anspruch, **dadurch gekennzeichnet, dass** der Träger (38) eine Grundplatte (38.1) umfasst, die an dem Innenbehälter (24) durch Befestigungselemente (44) befestigt ist, sowie einen mit der Grundplatte (38.1) fest verbundenen rohrförmigen Abschnitt (38.2), der eine Achse (A38) aufweist, die im Wesentlichen mit der Bewegungsrichtung (DD) zusammenfällt und auf den der Ring (40) aufgeschoben ist.

5. Tank nach einem der Ansprüche 3 bis 4, **dadurch gekennzeichnet, dass** das Befestigungssystem (42) einen an dem rohrförmigen Abschnitt (38.2) vorgesehenen Gewindeabschnitt (46) umfasst sowie eine Mutter (48), die dazu ausgebildet ist, auf den Gewindeabschnitt (46) geschraubt zu werden.

6. Tank nach dem vorhergehenden Anspruch, **dadurch gekennzeichnet, dass** das Befestigungssystem (42) ein Verdrehsicherungssystem (50) für die Mutter (48) und/oder einen Kompressionsring (52), der zwischen der Mutter (48) und dem Ring (40) angeordnet ist, und/oder zwei Scherringe (54), die zu beiden Seiten des Rings (40) angeordnet sind, umfasst.

7. Tank nach einem der Ansprüche 3 bis 6, **dadurch gekennzeichnet, dass** der Außenbehälter (22) eine Öffnung (56) im Bereich des Trägers (38) sowie einen Deckel (58) zum Verschließen der Öffnung (56) umfasst.

8. Tank nach einem der Ansprüche 2 bis 7, **dadurch gekennzeichnet, dass** der Außenbehälter (22) für jeden Kopf (32) eine Klammer (34) mit U-förmigem Querschnitt umfasst, die eine Basis (34.1) umfasst, gegen die der Kopf (32) befestigt ist und die in einer im Wesentlichen quer verlaufenden Ebene angeordnet ist, sowie Schenkel (34.2), die die Basis (34.1) mit dem Außenbehälter (22) verbinden.

9. Tank nach einem der vorhergehenden Ansprüche, **dadurch gekennzeichnet, dass** das Verbindungssystem (26) ein Sicherheitssystem (60) umfasst, das eine mit dem Außenbehälter (22) fest verbundene Aufnahmehülse (60.1) beinhaltet, die eine mit der Bewegungsrichtung (DD) zusammenfallende Achse (A60.1) aufweist, sowie eine Steckverlängerung (60.2), die mit dem Innenbehälter (24) fest verbunden ist und in der Aufnahmehülse (60.1) angeordnet ist, wobei die Steckverlängerung (60.2) und die Aufnahmehülse (60.1) so bemessen sind, dass ein Spiel um die Steckverlängerung (60.2) herum zwischen der Aufnahmehülse (60.1) und der Steckverlängerung (60.2) fortbesteht, wenn die Zungen (30) nicht beschädigt sind.

## Claims

1. Tank comprising an outer chamber (22), an inner chamber (24) positioned in the outer chamber (22) and first and second link systems (26, 26'), diametrically opposite, linking the outer and inner chambers (22, 24), the outer and inner chambers (22, 24) being displaced with respect to one another in a direction of displacement (DD) in operation, the tank being such that at least one of the first and second link systems (26, 26') comprises a central part (28) linked to a first element out of the outer chamber (22) and the inner chamber (24) and at least three blades (30) distributed around the central part (28), each blade (30) extending between a first end linked to the central part (28) and a second end which has a head (32) linked to a second element, different from the first element, out of the outer chamber (22) and the inner chamber (24), each blade (30) being sufficiently flexible to be deformed elastically between its first and second ends in the direction of displacement (DD),
**characterized in that** the blades (30) are curved and have a profile such that the heads (32) are:
- offset towards the inner chamber (24) with respect to the central part (28) in the absence of strains, the absence of strains corresponding to the absence of hydrogen in the inner chamber (24), and
- disposed substantially in a same transverse plane as the central part (28) in the presence of strains, in operation, the presence of strains corresponding to the presence of hydrogen in the cryogenic state in the inner chamber (24).

2. Tank according to Claim 1, **characterized in that** the central part (28) is linked to the inner chamber (24) and **in that** each head (32) is linked to the outer chamber (22).

3. Tank according to the preceding claim, **characterized in that** the central part (28) comprises a support (38) secured to the inner chamber (24), a ring (40) linked to the outer chamber (22) via the blades (30) and configured to be positioned around the support (38) and a fixing system (42) configured to immobilize the ring (40) with respect to the support (38) at least in the direction of displacement (DD), the link system (26) comprising dissociable first and second parts (26.1, 26.2), the first part (26.1) comprising the ring (40), the blades (30) and the heads (32), the second part (26.2) comprising the support (38).

4. Tank according to the preceding claim, **characterized in that** the support (38) comprises a base (38.1) fixed onto the inner chamber (24) by the fixing elements (44) and a tubular portion (38.2) secured to the base (38.1), having an axis (A38) substantially coinciding with the direction of displacement (DD) and onto which the ring (40) is fitted.

5. Tank according to one of Claims 3 and 4, **characterized in that** the fixing system (42) comprises a threaded section (46) provided on the tubular portion (38.2) and a nut (48) configured to be screwed onto the threaded section (46).

6. Tank according to the preceding claim, **characterized in that** the fixing system (42) comprises a system (50) for blocking rotation of the nut (48) and/or a compression fitting (52) inserted between the nut (48) and the ring (40) and/or two shear rings (54) positioned on either side of the ring (40).

7. Tank according to one of Claims 3 to 6, **characterized in that** the outer chamber (22) comprises an aperture (56) in line with the support (38) and a cover (58) for blocking the aperture (56).

8. Tank according to one of Claims 2 to 7, **characterized in that** the outer chamber (22) comprises, for each head (32), an attachment (34) with a U section, comprising a base (34.1) against which the head (32) is fixed, positioned in a substantially transverse plane and legs (34.2) linking the base (34.1) to the outer chamber (22).

9. Tank according to one of the preceding claims, **characterized in that** the link system (26) comprises a safety system (60) comprising a female sleeve (60.1) secured to the outer chamber (22), which has an axis (A60.1) coinciding with the direction of displacement (DD) and a male extension (60.2), secured to the inner chamber (24), positioned in the female sleeve (60.1), the male extension (60.2) and the female sleeve (60.1) being dimensioned such that there remains a play all around the male extension (60.2) between the female sleeve (60.1) and the male extension (60.2) when the blades (30) are not damaged.
